# EUROPÄISCHE PATENTANMELDUNG

(11) **EP 4 718 415 A2**
(43) Veröffentlichungstag der Anmeldung: **01.04.2026**
(21) Anmeldenummer: 26157791.0
(22) Anmeldetag: 20.05.2022
(51) Int. Cl.: G08B 7/06

(54) **NOTBELEUCHTUNGSELEMENT**

(30) Priorität: 26.05.2021 DE 102021113490
(62) Teilanmeldung aus: 22730182.7
(71) Anmelder: Lufthansa Technik AG, 22335 Hamburg (DE)
(72) Erfinder: Sutter, Wolfgang, 25469 Halstenbek (DE)
(74) Vertreter: Glawe, Delfs, Moll

(57) **Zusammenfassung**

Die Erfindung betrifft ein Notbeleuchtungselement (1), umfassend eine flächig ausgestaltete, elektrisch betreibbare Strahlungsquelle (2) zur flächigen Abgabe von elektromagnetischer Strahlung an ihrer Vorderseite (3). Auf der Vorderseite (3) der Strahlungsquelle (2) ist vollflächig eine langnachleuchtende Schicht (10) vorgesehen. Es sind die Strahlungsquelle (2) zur Abgabe von elektromagnetischer Strahlung im sichtbaren Bereich und die langnachleuchtende Schicht (10) zur teilweisen Transmission der Strahlung ausgebildet, wobei die Emission der Strahlungsquelle (2) und die Transmission der langnachleuchtenden Schicht (10) so aufeinander abgestimmt sind, dass die Abgabe des Notbeleuchtungselementes (1) von elektromagnetischer Strahlung im sichtbaren Bereich bei eingeschalteter 20 Strahlungsquelle (2) um wenigstens 50 % höher ist als bei ausgeschalter Strahlungsquelle (2).

## Beschreibung

Die Erfindung betrifft ein Notbeleuchtungselement, insbesondere für die Verwendung als Fluchtwegmarkierung in Verkehrsflugzeugen.

In Verkehrsflugzeugen sind im Stand der Technik grundsätzlich zwei Varianten für zwingend vorgeschriebene Notbeleuchtungselemente bekannt, um Passagieren im Notfall bei Dunkelheit und Ausfall der allgemeinen Kabinenbeleuchtung den Weg zu den Notausgängen zu weisen. Neben im Dunkeln leuchtenden Notausgangsschildern sind auch in Bodennähe angeordnete, beispielsweise streifenförmige Fluchtwegmarkierungen bekannt, denen gefolgt werden kann, um zum nächstgelegenen Notausgang zu gelangen.

Bekannte elektrische Systeme für Notbeleuchtungselemente umfassen Leuchteinheiten mit einem oder mehreren in einem Gehäuse zum Schutz vor äußeren Einflüssen angeordneten Leuchtmitteln, wie Glühbirnen oder LEDs, die durch elektrische Verkabelung an das Bordnetz des Flugzeuges angebunden und darüber betrieben werden können. Zusätzlich müssen zumindest bei bodennah angebrachten Leuchteinheiten noch Pufferbatterien vorgesehen werden, die den Betrieb der Leuchteinheiten auch bei Ausfall des Bordnetzes sicherstellen können. Entsprechende Systeme weisen insbesondere aufgrund der erforderlichen Pufferbatterien regelmäßig eine erhebliche Masse auf.

Aus dem Stand der Technik sind ebenfalls photolumineszente Systeme bekannt, bei denen die Fluchtwegmarkierung photolumineszente Oberflächen aufweist, die im Normalbetrieb durch das Umgebungs- oder Kabinenlicht aufgeladen werden und bei Dunkelheit - und insbesondere in einem Notfall - auch über einen längeren Zeitraum nachleuchten und so die Notausgänge und Fluchtwege anzeigen.

Für die phosphoreszierenden Systeme ist dabei sicherzustellen, dass die phosphoreszierenden Oberflächen im Normalbetrieb ausreichend von der Kabinenbeleuchtung aufgeladen werden, um so das erforderliche Nachleuchten bei Dunkelheit sicherstellen zu können.

Eben dies ist aufgrund der vermehrt für die Kabinenbeleuchtung eingesetzten LED-Technologie jedoch nicht mehr immer gewährleistet. Auch wenn LED-Beleuchtungen den Betreibern eine große Variabilität für die Beleuchtung einer Flugzeugkabine, bspw. hinsichtlich der Lichtfarbe, bei geringem Energieverbrauch bieten, ist in der Folge nicht sichergestellt, dass zumindest in den aus Sicherheitsgesichtspunkten relevanten Flugphasen ausreichend Licht in dem für die Aufladung der phosphoreszierenden Systeme relevanten spektralen Bereich zu Verfügung gestellt wird.

Der Erfindung liegt die Aufgabe zugrunde, ein Notbeleuchtungselement zu schaffen, bei dem die Nachteile aus dem Stand der Technik nicht mehr oder nur noch in vermindertem Umfang auftreten.

Gelöst wird diese Aufgabe durch ein Notbeleuchtungselement gemäß dem Hauptanspruch. Vorteilhafte Weiterbildungen sind Gegenstand der abhängigen Ansprüche.

Demnach betrifft die Erfindung ein Notbeleuchtungselement, insbesondere für ein Verkehrsflugzeug, umfassend eine flächig ausgestaltete, elektrisch betreibbare Strahlungsquelle zur flächigen Abgabe von elektromagnetischer Strahlung an ihrer Vorderseite, wobei vollflächig auf der Vorderseite der Strahlungsquelle eine langnachleuchtende Schicht vorgesehen ist, wobei die Eindringtiefe für die von der Strahlungsquelle abgegebenen Strahlung in die langnachleuchtende Schicht wenigstens der Dicke der langnachleuchtenden Schicht entspricht und die langnachleuchtende Schicht eine phosphoreszierendes Material umfasst, dessen Absorptionsspektrum sich mit dem Emissionsspektrum der Strahlungsquelle wenigstens teilweise überschneidet und dessen Emissionsspektrum im Wesentlichen im sichtbaren Bereich liegt.

Zunächst werden einige in Zusammenhang mit der Erfindung verwendete Begriffe erläutert.

Eine Schicht oder ein Material gilt als "langnachleuchtend", wenn sie nach Anregung durch Strahlung im UV- oder sichtbaren Bereich für eine Dauer von wenigstens einigen Sekunden bis hin zu mehreren Stunden ohne Aufrechterhaltung der Anregung nachleuchten kann. Dieser Effekt ist dem Fachmann auch als Phosphoreszenz ebenso bekannt, wie deren Abgrenzung zur Fluoreszenz, bei welcher das Nachleuchten praktisch unmittelbar nach Beendigung der Anregung abklingt.

Ein Element gilt als "flächig", wenn die charakteristischen Abmaße einer Fläche des Elementes um jeweils wenigstens eine Größenordnung (Zehnerpotenz) größer sind, als das charakteristische Abmaß des Elements senkrecht zu dieser Fläche. Bei einer rechteckigen Fläche sind die charakteristischen Abmaße bspw. die Länge und/oder Breite, bei einer kreisförmigen Fläche der Durchmesser. Bei einem lang gestreckten Element bildet dessen Länge das charakteristische Abmaß. Das Abmaß senkrecht zur fraglichen Fläche wird gemeinhin auch als "Dicke" des Elements bezeichnet.

Mit "Eindringtiefe" ist in Zusammenhang mit der Erfindung der Punkt bezeichnet, an dem eine elektromagnetische Welle beim Eindringen in ein Medium gerade eben über 0% der Ausgangsamplitude entspricht. Ist Eindringtiefe gleich der die Ausdehnung des Mediums in deren Richtung, verbleibt sämtliche Strahlung im Medium. Ist die Eindringtiefe größer als die Ausdehnung des Mediums in deren Richtung, wird eine Transmission durch das Medium erreicht.

Ein Absorptionsspektrum überschneidet sich mit einem Emissionsspektrum wenigstens teilweise, wenn ein Teil der Emission gemäß dem Emissionsspektrum in das Absorptionsspektrum fällt und somit absorbiert wird. Der Grad der Überlappung kann dabei von einem Fachmann für die gewünschte Funktionalität geeignet gewählt werden. Durch die Absorption von Strahlung wird die langnachleuchtende Schicht letztendlich "aufgeladen" und kann die so absorbierte Energie zeitlich verzögert als Emission wieder abgeben, wobei sich das Absorptionsspektrum und das Emissionsspektrum der nachleuchtenden Schicht grundsätzlich voneinander unterscheiden.

Die Erfindung hat erkannt, dass eine Kombination aus elektrisch betreibbare Strahlungsquelle zur flächigen Abgabe von elektromagnetischer Strahlung, wie sie grundsätzlich auch von bekannten elektrischen Systemen zur Notfallbeleuchtung bzw. Fluchtwegmarkierungen bekannt sind, mit einer nachleuchtenden Schicht, vergleichbar zur phosphoreszierenden Oberfläche phosphoreszierender Systeme, Vorteile bietet, welche bei den aus dem Stand der Technik bekannten Systemen für sich genommen nicht realisiert werden können.

So kann aufgrund der nachleuchtenden Schicht des erfindungsgemäßen Notbeleuchtungselementes, welche aufgrund der erfindungsgemäßen Überlappung von Absorptions- und Emissionsspektrum durch die elektrisch betreibbare Strahlungsquelle aufgeladen wird, sodass das Notbeleuchtungselement auch bei etwaigem Wegfall der Energieversorgung noch im sichtbaren Bereich nachleuchtet, ohne dass dafür eine Pufferbatterie zum Weiterbetrieb der Strahlungsquelle selbst erforderlich wäre. Durch den möglichen Wegfall der Pufferbatterie kann das erfindungsgemäße Notbeleuchtungselement leichter ausgeführt werden als ein vergleichbares elektrisches System zur Notfallbeleuchtung gemäß dem Stand der Technik.

Gleichzeitig kann durch die erfindungsgemäße Kombination aus elektrisch betreibbarer Strahlungsquelle und langnachleuchtende Schicht sichergestellt werden, dass der langnachleuchtenden Schicht ausreichend Strahlung in deren Absorptionsspektrum zugeführt wird, um so die langnachleuchtende Schicht unabhängig von dem Beleuchtungsszenario in der Umgebung ausreichend aufladen zu können. Insbesondere kann das erfindungsgemäße Notbeleuchtungselement also unabhängig von der übrigen Kabinenbeleuchtung aufgeladen werden, sodass diese frei und insbesondere ohne Rücksicht auf das Aufladen von Notfallelementen gestaltet werden kann.

Um eine ausreichende Aufladung der langnachleuchtenden Schicht durch die Strahlungsquelle zu ermöglichen, wobei das Aufladen ausgehend von der mit der Vorderseite der Strahlungsquelle zusammenfallenden Rückseite der nachleuchtenden Schicht erfolgt, während die letztendlich gewünschte Emission der nachleuchtenden Schicht an deren Vorderseite erfolgen soll, ist vorgesehen, dass die Eindringtiefe für die von der Strahlungsquelle ausgehenden Strahlung in die langnachleuchtende Schicht wenigstens deren Dicke entspricht. So ist sichergestellt, dass auch die Bereiche der langnachleuchtenden Schicht unmittelbar an deren Vorderseite durch die Strahlungsquelle ausreichend aufgeladen werden, was für die Lichtemission der nachleuchtenden Schicht von erheblichem Vorteil ist. Gleichzeitig kann durch die entsprechende Vorgabe der Eindringtiefe auch elektromagnetische Strahlung aus der Umgebung tief in die nachleuchtende Schicht eindringen und die Bereiche nahe der Strahlungsquelle aufladen, auch wenn diese zeitweise nicht betrieben wird.

Um die Bereiche der nachleuchtenden Schicht unmittelbar an deren Vorderseite gut durch die Strahlungsquelle aufladen zu können, ist bevorzugt, wenn die Eindringtiefe für die von der Strahlungsquelle ausgehenden Strahlung derart größer als die Dicke der langnachleuchtenden Schicht gewählt ist, dass die Transmission durch die nachleuchtende Schicht größer ist als 0%. Bevorzugt liegt die Transmission zwischen 5% und 50%, weiter vorzugsweise zwischen 8% und 25%. Bei entsprechender Transmission ist die bis an die Vorderseite der nachleuchtenden Schicht dringende elektromagnetische Strahlung der Strahlungsquelle erhöht, sodass ein schnelles Aufladen der langnachleuchtenden Schicht auch in diesem Bereich erreicht werden kann.

Um eine entsprechende Eindringtiefe zu erreichen, kann die langnachleuchtende Schicht in einer bevorzugten Ausführungsform eine transparente oder transluzente Matrix mit darin eingebetteten phosphoreszierenden Pigmenten umfassen. Durch geeignete Wahl der Anzahl und Ausgestaltung der Pigmente sowie der Ausgestaltung der Matrix kann die Eindringtiefe von Strahlung in die nachleuchtende Schicht und damit letztendlich auch die Transmission der nachleuchtenden Schicht gut beeinflusst werden. Die transparente oder transluzente Matrix kann aus einem Polymer (bspw. Polycarbonat, einem Acrylat, Epoxid, Silikon) oder Glas sein. Die phosphoreszierenden Pigmente basieren vorzugsweise auf Zink-Sulfid oder Strontium-Aluminat.

Die langnachleuchtende Schicht dient der Emission von sichtbarem Licht u. a. dann, wenn die Strahlungsquelle abgeschaltet wird oder ausfällt. Dabei ist bevorzugt, wenn die langnachleuchtende Schicht derart ausgebildet ist, dass sie nach vollständigem Aufladen und anschließender 10 Minuten Dunkelheit eine Leuchtdichte von wenigstens 0,03 mcd/m², vorzugsweise von wenigstens 0,1 mcd/m², weiter vorzugsweise von wenigstens 0,3 mcd/m² abgibt. Entsprechende Lichtabgaben geltend bspw. für Fluchtwegmarkierungen in Flugzeugen im Falle einer Evakuierung regelmäßig als ausreichend.

Es ist bevorzugt, wenn die Strahlungsquelle zur Abgabe von elektromagnetischer Strahlung im sichtbaren Bereich und die langnachleuchtende Schicht zur teilweisen Transmission der Strahlung der Strahlungsquelle ausgebildet sind. Dabei können die Emission der Strahlungsquelle und die Transmission der langnachleuchtenden Schicht vorzugsweise so aufeinander abgestimmt sein, dass die Abgabe des Notbeleuchtungselementes von elektromagnetischer Strahlung im sichtbaren Bereich bei eingeschalteter Strahlungsquelle um wenigstens 50 % höher ist als bei ausgeschalter Strahlungsquelle. Die Abgabe elektromagnetischer Strahlung bzw. die abgegebene elektromagnetische Strahlung entspricht dabei der Leuchtdichte, die üblicherweise in cd/m² oder mcd/m² angegeben wird. Das Notbeleuchtungselement kann dann bei eingeschalteter Strahlungsquelle heller als durch etwaige Minimalanforderungen festgelegte minimale Lichtabgabe leuchten, womit die Sicherheit grundsätzlich erhöht werden kann. Kommt es zu einem Ausfall der Strahlungsquelle in einem Notfall können durch die langnachleuchtende Schicht die Minimalanforderungen aber wenigstens für einen gewissen Zeitraum weiterhin erfüllt werden.

Alternativ dazu kann die Strahlungsquelle zur Abgabe von elektromagnetischer Strahlung im UV-Bereich - und somit im nichtsichtbaren Bereich - ausgebildet sein. In diesem Fall erfolgt die Abgabe vom sichtbaren Licht durch das Notbeleuchtungselement allein durch die langnachleuchtende Schicht, die bei eingeschalteter Strahlungsquelle dauerhaft aufgeladen bleibt. Vorteil dieser Ausführungsform ist die zunächst gleichbleibende Leuchtkraft des Notbeleuchtungselements bei Ausfall der Strahlungsquelle bspw. aufgrund eines Notfalls. Insbesondere wenn die Aufladung der langnachleuchtenden Schicht im UV-C-Bereich erfolgt, ist es bevorzugt, wenn auf der von der Strahlungsquelle abgewandten Seite der langnachleuchtenden Schicht - also auf deren Vorderseite - vorzugsweise ein auf die Strahlung der Strahlungsquelle abgestimmter UV-Filter angeordnet ist.

Es ist bevorzugt, wenn die Strahlungsquelle als Reflexionsschicht für darauf auftreffende Strahlung zumindest im sichtbaren Bereich ausgebildet ist. Durch die Ausgestaltung als Reflexionsschicht kann sowohl das Aufladen der langnachleuchtenden Schicht, als auch die Lichtabgabe durch die nachleuchtende Schicht verbessert werden, da die ansonsten wirkungslos auf die Strahlungsquelle auftreffende Strahlung wieder zurück in Richtung der Vorderseite der langnachleuchtenden Schicht reflektiert wird. Es lassen sich so Effizienzgewinne der langnachleuchtenden Schicht von bis zu 15 % erreichen. Die Reflexionseigenschaft kann durch eine helle, vorzugsweise weiße Farbgebung oder eine spiegelnde Oberfläche der Strahlungsquelle erreicht werden. Eine helle Farbgebung kann durch die Verwendung reflektierender Pigmente, wie beispielsweise Titanoxyd, erzielt werden. Es sind auch Verspiegelungen beispielsweise durch Chrombedampfen oder durch chemische oder galvanische Beschichtung mit einem reflektierenden Material möglich.

Die flächige Strahlungsquelle kann als flächige Anordnung einer Vielzahl von lichtemittierenden Dioden ausgebildet sein. Die lichtemittierenden Dioden können dabei unmittelbar auf ein Trägermaterial aufgedruckt sein, auf die vorzugsweise auch die Leiterbahnen zur Versorgung der lichtemittierenden Dioden mit elektrischer Leistung aufgedruckt sind. Alternativ dazu kann die flächige Strahlungsquelle eine Elektrolumineszenzfolie sein.

Es ist bevorzugt, wenn die Dicke der flächigen Strahlungsquelle kleiner als 2,5 mm, vorzugsweise kleiner 1,5 mm, weiter vorzugsweise kleiner 0,75 mm, besonders vorzugsweise kleiner 0,5 mm ist. Entsprechend flach ausgestaltete Strahlungsquellen ermöglichen eine geringe Gesamtdicke des Notbeleuchtungselements.

Es ist bevorzugt, wenn die Dicke der langnachleuchtenden Schicht wenigstens 0,4 mm, vorzugsweise wenigstens 0,7 mm, weiter vorzugsweise wenigstens 1,2 mm beträgt. Es hat sich gezeigt, dass sich bei entsprechenden Dicken eine günstige Ausgestaltung der langnachleuchtenden Schicht ergibt.

Das Notbeleuchtungselement weist vorzugsweise eine Kabelanbindung und/oder eine Kopplungsspule zur drahtlosen Energieübertragung zur Versorgung der Strahlungsquelle mit elektrischer Energie auf. Sofern die Strahlungsquelle nicht unmittelbar über die Schaltung der Energiezufuhr gesteuert wird, kann das Notbeleuchtungselement auch eine Steuerungsschaltung umfassen, mit welcher der Einschaltzustand der Strahlungsquelle, bspw. aufgrund eines externen Steuersignals, verändert werden kann. Die Steuerungsschaltung kann auf ein Trägermaterial, bspw. der flächigen Strahlungsquelle, aufgedruckt sein.

Es ist bevorzugt, wenn das Notbeleuchtungselement zum Schutz vor äußeren Einflüssen auf der der Strahlungsquelle abgewandten Seite der langnachleuchtenden Schicht bzw. deren Vorderseite eine transparente oder transluzente Schutzschicht vorgesehen ist und/oder Strahlungsquelle und langnachleuchtende Schicht in einem Gehäuse angeordnet sind, welches wenigstens im Bereich der langnachleuchtenden Schicht transparent oder transluzent ist. Entsprechende Gehäuse bzw. Schutzschichten können die Strahlungsquelle und die langnachleuchtende Schicht vor mechanischen Einwirkungen und/oder Feuchtigkeit schützen, womit die Lebensdauer des Notbeleuchtungselementes regelmäßig verlängert werden kann.

Es ist besonders bevorzugt, wenn das Notbeleuchtungselement als Fluchtwegmarkierung, vorzugsweise als streifenförmige Fluchtwegmarkierung zur Verlegung am Boden einer Flugzeugkabine, ausgebildet ist. Vergleichbare Fluchtwegmarkierungen. anderer Bauart, sowie deren Verwendung zur Markierung von Fluchtwegen, insbesondere an Bord von Flugzeugen, sind aus dem Stand der Technik bekannt.

Die Erfindung wird nun anhand vorteilhafter Ausführungsformen unter Bezugnahme auf die beigefügten Zeichnungen beispielhaft beschrieben. Es zeigen:
- Figur 1:: ein erstes Ausführungsbeispiel eines erfindungsgemäßen Notbeleuchtungselementes;
- Figur 2:: ein zweites Ausführungsbeispiel eines erfindungsgemäßen Notbeleuchtungselementes;
- Figur 3:: eine schematische Darstellung der Emissions- und Absorptionsspektren von Strahlungsquelle und langnachleuchtender Schicht aus Figur 1 bzw. 2;
- Figur 4:: ein drittes Ausführungsbeispiel eines erfindungsgemäßen Notbeleuchtungselementes; und
- Figur 5:: eine schematische Darstellung der Emissions- und Absorptionsspektren von Strahlungsquelle und langnachleuchtender Schicht aus Figur 4.

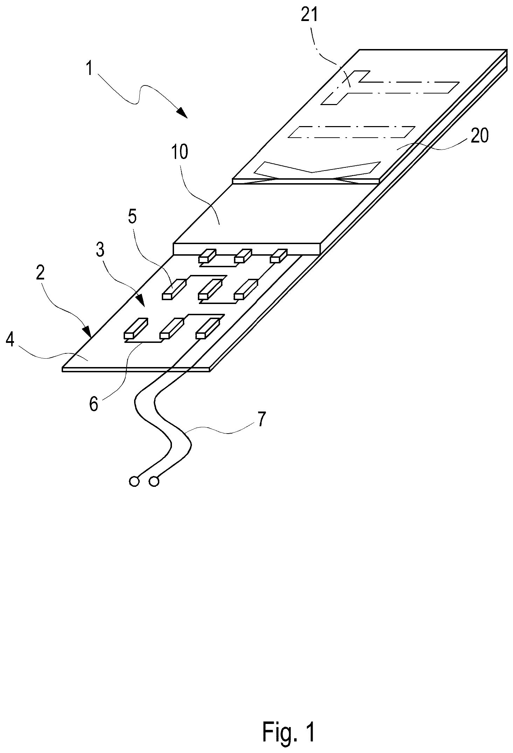

In Figur 1 ist ein erstes Ausführungsbeispiel eines erfindungsgemäßen Notbeleuchtungselementes 1 schematisch dargestellt, wobei einzelne Elemente bzw. Schichten nur teilweise dargestellt sind, um einen Einblick auf die darunterliegenden Elemente bzw. Schichten zu ermöglichen. Grundsätzlich erstrecken sich die einzelnen Schichten aber jeweils vollflächig über die jeweils darunterliegenden Schichten.

Das Notbeleuchtungselement 1 umfasst eine flächig ausgestaltete Strahlungsquelle 2 umfassend einen auf der Vorderseite 3 der Strahlungsquelle 2 sichtbares Licht reflektierend ausgestalteten Trägermaterial 4 auf dem eine Vielzahl von lichtemittierenden Dioden 5 in einer flächigen Anordnung sowie Leiterbahnen 6 zur Energieversorgung der Dioden aufgedruckt sind, sodass die Strahlungsquelle 2 an ihrer Vorderseite elektromagnetische Strahlung - in diesem Fall Licht im sichtbaren Bereich - flächig abgibt. Die Leiterbahnen 6 sind bis zum Rand des Trägermaterials 4 geführt und mit einer Kabelanbindung 7 zur Versorgung der Strahlungsquelle 2 mit elektrischer Energie verbunden. Die Dicke der Strahlungsquelle 2 beträgt bei diesem Ausführungsbeispiel 0,75 mm.

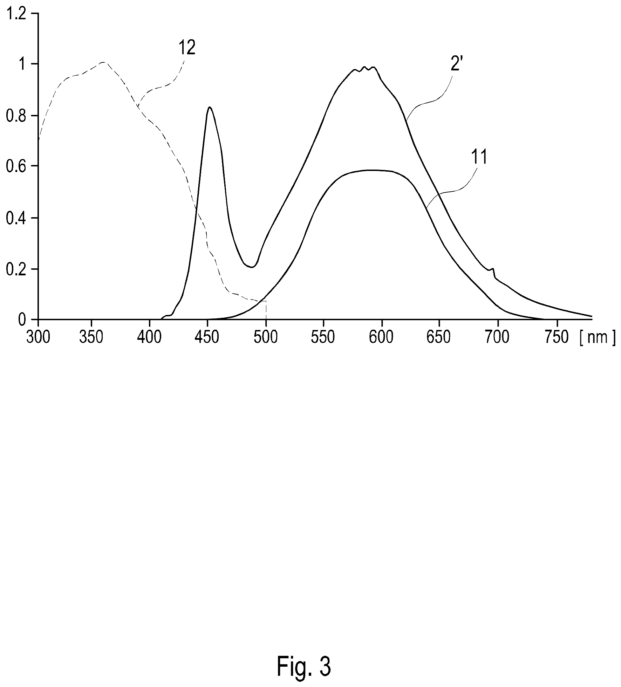

Auf der Vorderseite 3 der Strahlungsquelle 2 ist vollflächig eine langnachleuchtende Schicht 10 mit einer Dicke von 1,2 mm vorgesehen, bei der in einer transparenten Matrix aus Polycarbonat langnachleuchtende Pigmente auf Basis von Zink-Sulfid eingebettet sind. Wie in Figur 3 zu erkennen, liegt das Emissionsspektrum 11 der langnachleuchtenden Pigmente und somit der langnachleuchtenden Schicht 10 im sichtbaren Bereich. Das Absorptionsspektrum 12 der langnachleuchtenden Schicht 10 überschneidet sich mit dem Emissionsspektrum 2' der Strahlungsquelle 2, sodass beim Betrieb der Strahlungsquelle 2 die langnachleuchtende Schicht 10 aufgeladen wird.

Die langnachleuchtende Schicht 10 ist durch geeignete Wahl der Anzahl der Pigmente und deren Anordnung in der Matrix so gestaltet, dass die Eindringtiefe für die von der Strahlungsquelle 2 ausgehende Strahlung in die langnachleuchtende Schicht 10 größer ist als deren Dicke, sodass ein Teil der fraglichen Strahlung an der Vorderseite der langnachleuchtenden Schicht 10 austritt. Diese Transmission durch die langnachleuchtende Schicht 10 und die Emission der Strahlungsquelle 2 sind so aufeinander abgestimmt, dass die Abgabe des Notbeleuchtungselementes 1 von elektromagnetischer Strahlung im sichtbaren Bereich bzw. die Leuchtdichte bei eingeschalteter Strahlungsquelle 2 um wenigstens 50 % höher ist als bei ausgeschalter Strahlungsquelle 2, insbesondere also um 50 % höher als die Emission bzw. die Leuchtdichte der voll aufgeladenen langnachleuchtenden Schicht 10.

Gleichzeitig ist die langnachleuchtende Schicht 10 derart ausgebildet, dass sie nach vollständigem Aufladen und anschließender 10 Minuten Dunkelheit eine Leuchtdichte von wenigstens 0,3 mcd/m² abgibt. Auch dies lässt sich neben geeigneter Materialwahl durch die Wahl der Anzahl der Pigmente und deren Anordnung in der Matrix erreichen.

Es dem Fachmann mit überschaubarem Aufwand möglich, eine Komposition für die langnachleuchtende Schicht 10 aufzufinden, welche sämtlichen vorstehenden Anforderungen genügt.

Auf der Vorderseite der langnachleuchtenden Schicht 10 ist weiterhin eine Schutzschicht 20 vorgesehen, welche die darunterliegenden Elemente 10, 2 vor äußeren Einflüssen schützt. Die Schutzschicht 20 ist im wesentlichen transparent ausgestaltet, wobei Bereiche 21 der Schutzschicht 20 zur Bildung des Wortes "EXIT" eingefärbt sind, sodass das Wort sowohl bei externer Beleuchtung des Notbeleuchtungselementes 1 als auch bei eingeschalteter Strahlungsquelle 2 bzw. Nachleuchten der langnachleuchtenden Schicht 10 gut lesbar ist.

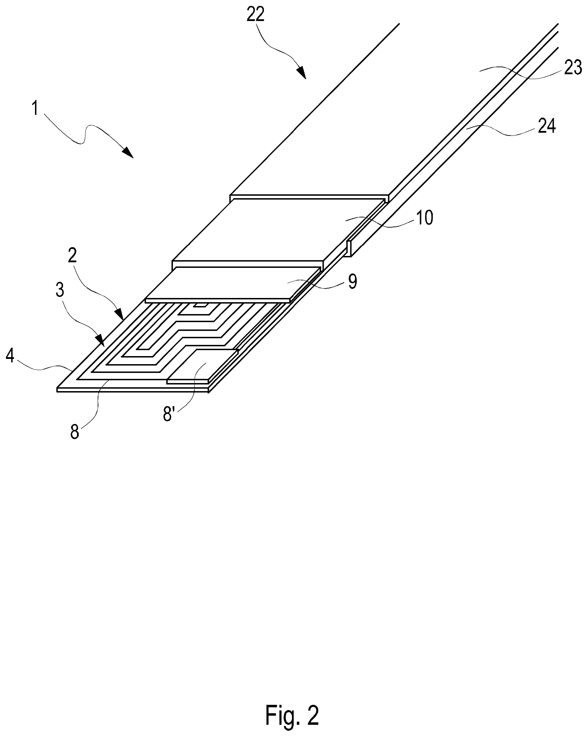

In Figur 2 ist ein zweites Ausführungsbeispiel eines erfindungsgemäßen Notbeleuchtungselementes 1 dargestellt. Das Notbeleuchtungselement 1 ist dabei als lang gestreckte bzw. streifenförmige Fluchtwegemarkierung zur Verlegung am Boden der Flugzeugkabine eines Verkehrsflugzeugs ausgebildet. Die Darstellung in Figur 2 beschränkt sich auf ein Ende des Notbeleuchtungselementes 1, wobei - vergleichbar zu Figur 1 - einzelne Elemente bzw. Schichten nicht vollständig dargestellt sind, um einen Einblick auf die darunterliegenden Elemente bzw. Schichten zu ermöglichen. Grundsätzlich erstrecken sich die einzelnen Schichten aber jeweils vollflächig über die jeweils darunterliegenden Schichten.

Das Notbeleuchtungselement 1 umfasst Trägermaterial 4 als Teil einer Strahlungsquelle 2, auf welches eine Kopplungsspule 8 aufgedruckt und mit einer Steuerungsschaltung 8' verbunden ist. Die Kopplungsspule 8 dient dabei nicht nur dem Empfang von drahtlos übertragener Energie, sondern auch von drahtlos übertragenen Steuerungssignalen zum Aktivieren und Deaktivieren der Strahlungsquelle 2 durch die Steuerungsschaltung 8'. Auch die Steuerungsschaltung 8' ist auf das Trägermaterial 4 aufgedruckt. Als das die elektromagnetische Strahlung erzeugende Element der Strahlungsquelle 2 ist eine Elektrolumineszenzfolie 9 vorgesehen, die flächig auf dem Trägermaterial 4 angeordnet ist, wobei sich eine Gesamtdicke der Strahlungsquelle 2 von nur 0,5 mm ergibt. Die Elektrolumineszenzfolie 9 ist für sichtbares Licht reflektierend.

Auf der Vorderseite der Strahlungsquelle 2 ist eine langnachleuchtende Schicht 10 vorgesehen, die identisch zu derjenigen aus Figur 1 ist. Die Schicht 10 weist also eine Dicke von 1,2 mm auf und umfasst in einer transparenten Matrix aus Polycarbonat eingebettete langnachleuchtende Pigmente auf Basis von Zink-Sulfid. Da die Elektrolumineszenzfolie 9 des zweiten Ausführungsbeispiels gemäß Figur 3 ein zu den als Strahlungsquelle 2 im ersten Ausführungsbeispiel gemäß Figur 1 eingesetzten lichtemittierenden Dioden 5 vergleichbares Emissionsspektrum 2' aufweisen, finden sich auch bei dem zweiten Ausführungsbeispiel die Verhältnisse der Emissions- und Absorptionsspektren gemäß Figur 3 wieder. Die langnachleuchtende Schicht 10 ist durch geeignete Wahl der Anzahl der Pigmente und deren Anordnung in der Matrix so gestaltet, dass die Eindringtiefe für die von der Strahlungsquelle 2 ausgehende Strahlung in die langnachleuchtende Schicht 10 nur wenig größer ist als deren Dicke, sodass nur wenig von der Strahlungsquelle 2 ausgehende Strahlung an der Vorderseite der langnachleuchtenden Schicht 10 austritt. Die Transmission für die fragliche Strahlung durch die langnachleuchtende Schicht 10 kann bspw. 8% betragen.

Um den Belastungen als am Boden verlegte Fluchtwegmarkierung standhalten zu können, weist das Notbeleuchtungselement 1 ein die Strahlungsquelle 2 und die nachleuchtende Schicht 10 umhüllenden Gehäuse 22 auf, welches nicht nur vor mechanischer Belastung schützt, sondern auch Feuchtigkeit abhält. Das Gehäuse 22 besteht aus zwei miteinander feuchtigkeitsdicht verbundenen Teilen 23, 24, wobei das die Vorderseite der nachleuchtende Schicht 10 überspannende Gehäuseteil 23 transparent ausgeführt ist. Das Gehäuseteil 23 kann dabei auch eingefärbt sein.

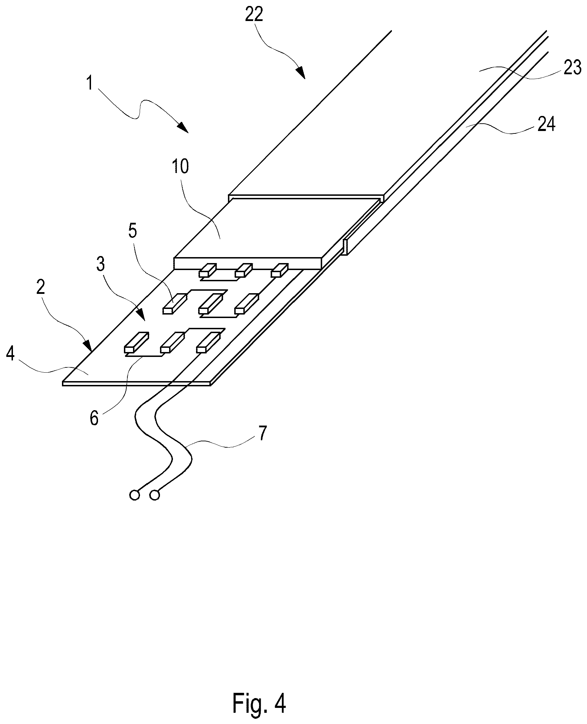

In Figur 4 ist ein drittes Ausführungsbeispiel eines erfindungsgemäßen Notbeleuchtungselementes 1 dargestellt. Das Notbeleuchtungselement 1 ist dabei - vergleichbar zum zweiten Ausführungsbeispiel gemäß Figur 2 - als lang gestreckte bzw. streifenförmige Fluchtwegemarkierung zur Verlegung am Boden der Flugzeugkabine eines Verkehrsflugzeugs ausgebildet. Die Darstellung in Figur 4 beschränkt sich wieder auf ein Ende des Notbeleuchtungselementes 1, wobei einzelne Elemente bzw. Schichten nicht vollständig dargestellt sind, um einen Einblick auf die darunterliegenden Elemente bzw. Schichten zu ermöglichen. Grundsätzlich erstrecken sich die einzelnen Schichten aber jeweils vollflächig über die jeweils darunterliegenden Schichten.

Das Notbeleuchtungselement 1 umfasst eine flächig ausgestaltete Strahlungsquelle 2 umfassend einen auf der Vorderseite 3 der Strahlungsquelle 2 sichtbares Licht reflektierend ausgestalteten Trägermaterial 4 auf dem eine Vielzahl von lichtemittierenden Dioden 5 in einer flächigen Anordnung sowie Leiterbahnen 6 zur Energieversorgung der Dioden aufgedruckt sind, sodass die Strahlungsquelle 2 an ihrer Vorderseite elektromagnetische Strahlung - in diesem Fall UV-C-Strahlung - flächig abgibt. Die Leiterbahnen 6 sind bis zum Rand des Trägermaterials 4 geführt und mit einer Kabelanbindung 7 zur Versorgung der Strahlungsquelle 2 mit elektrischer Energie verbunden. Die Dicke der Strahlungsquelle 2 beträgt bei diesem Ausführungsbeispiel 0,75 mm.

Auf der Vorderseite der Strahlungsquelle 2 ist eine langnachleuchtende Schicht 10 mit einer Dicke von 0,7 mm vorgesehen, bei der in einer Matrix aus Silikon langnachleuchtende Pigmente basierend auf Strontium-Aluminat dispergiert sind. Auch hier ist die langnachleuchtende Schicht 10 so ausgebildet, dass die Eindringtiefe für die von der Strahlungsquelle 2 ausgehenden Strahlung größer ist als die Dicke der langnachleuchtenden Schicht 10, und gleichzeitig eine Leuchtdichte von 0,1 mcd/m² nach vollständigem Aufladen der langnachleuchtenden Schicht 10 und anschließender 10 Minuten Dunkelheit erreicht wird.

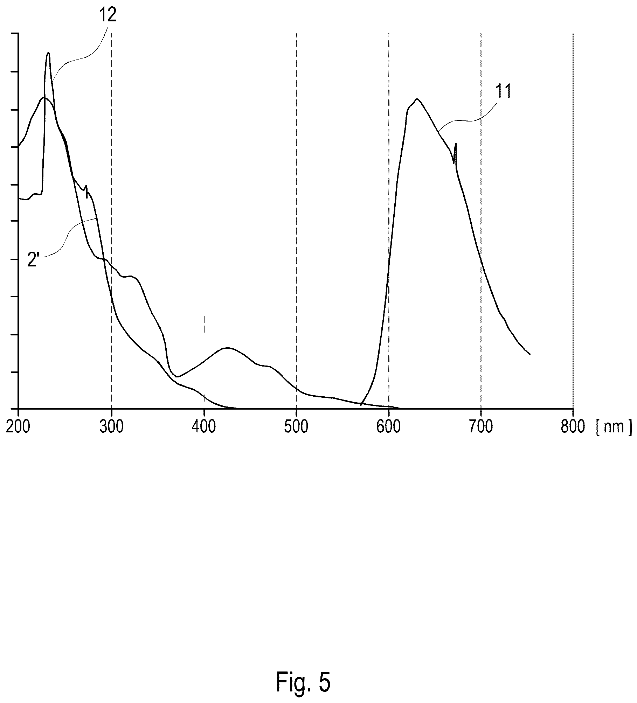

Wie sich aus den Emissions- und Absorptionsspektren der Strahlungsquelle 2 und der langnachleuchtenden Schicht 10 gemäß Figur 5 ergibt, gibt die Strahlungsquelle 2 an ihrer Vorderseite Strahlung im UV-C-Bereich ab (Emissionsspektrum 2'), die vollständig in das Absorptionsspektrum 12 der langnachleuchtenden Schicht 10 fällt, die wiederum Licht im sichtbaren Bereich emittiert (Emissionsspektrum 11). Bei dem Notbeleuchtungselement 1 gemäß Figur 4 wird die letztendliche Lichtemission also ausschließlich durch die langnachleuchtende Schicht 10 erzeugt, die jedoch von der Strahlungsquelle 2 im eingeschalteten Zustand dauerhaft aufgeladen wird bzw. bleibt.

Um den Belastungen als am Boden verlegte Fluchtwegmarkierung standhalten zu können, weist das Notbeleuchtungselement 1 ein die Strahlungsquelle 2 und die nachleuchtende Schicht 10 umhüllenden Gehäuse 22 auf, welches nicht nur vor mechanischer Belastung schützt, sondern auch Feuchtigkeit abhält. Das Gehäuse 22 besteht aus zwei miteinander feuchtigkeitsdicht verbundenen Teilen 23, 24, wobei das die Vorderseite der nachleuchtende Schicht 10 überspannende Gehäuseteil 23 transparent ausgeführt ist. Um einen Austritt der UV-C-Strahlung der Strahlungsquelle 2 nach außen zu vermeiden, ist der Gehäuseteil 23 zusätzlich als UV-Filter zum Herausfiltern von UV-C-Strahlung ausgebildet. Das von der nachleuchtenden Schicht 10 ausgehende Licht im sichtbaren Bereich kann das Gehäuseteil 23 jedoch ungefiltert passieren.

Gemäß Aspekt 1 wird ein Notbeleuchtungselement offenbart, insbesondere für ein Verkehrsflugzeug, umfassend eine flächig ausgestaltete, elektrisch betreibbare Strahlungsquelle 2 zur flächigen Abgabe von elektromagnetischer Strahlung an ihrer Vorderseite 3, dadurch gekennzeichnet, dass vollflächig auf der Vorderseite 3 der Strahlungsquelle 2 eine langnachleuchtende Schicht 10 vorgesehen ist, wobei die Eindringtiefe für die von der Strahlungsquelle 2 abgegebenen Strahlung in die langnachleuchtende Schicht 10 wenigstens der Dicke der langnachleuchtenden Schicht 10 entspricht und die langnachleuchtende Schicht 10 phosphoreszierendes Material umfasst, dessen Absorptionsspektrum sich mit dem Emissionsspektrum der Strahlungsquelle 2 wenigstens teilweise überschneidet und dessen Emissionsspektrum im Wesentlichen im sichtbaren Bereich liegt.

Gemäß Aspekt 2 wird ein Notbeleuchtungselement gemäß Aspekt 1 offenbart, dadurch gekennzeichnet, dass die langnachleuchtende Schicht 10 eine transparente oder transluzente Matrix, vorzugsweise aus einem Polymer, Acrylat, Epoxid, Silikon oder Glas, mit darin eingebetteten phosphoreszierenden Pigmenten, vorzugsweise auf Basis von Zink-Sulfid oder Strontium-Aluminat, umfasst.

Gemäß Aspekt 3 wird ein Notbeleuchtungselement nach einem der vorhergehenden Aspekte offenbart, dadurch gekennzeichnet, dass die langnachleuchtende Schicht 10 derart ausgebildet ist, dass sie nach vollständigem Aufladen und anschließender 10 Minuten Dunkelheit eine Leuchtdichte von wenigstens 0,03 mcd/m², vorzugsweise von wenigstens 0,1 mcd/m², weiter vorzugsweise von wenigstens 0,3 mcd/m² abgibt.

Gemäß Aspekt 4 wird ein Notbeleuchtungselement nach einem der vorhergehenden Aspekte offenbart, dadurch gekennzeichnet, dass die Strahlungsquelle 2 zur Abgabe von elektromagnetischer Strahlung im sichtbaren Bereich und die langnachleuchtende Schicht 10 zur teilweisen Transmission der Strahlung ausgebildet sind, wobei die Emission der Strahlungsquelle 2 und die Transmission der langnachleuchtenden Schicht 10 vorzugsweise so aufeinander abgestimmt sind, dass die Abgabe des Notbeleuchtungselementes 1 von elektromagnetischer Strahlung im sichtbaren Bereich bei eingeschalteter Strahlungsquelle 2 um wenigstens 50 % höher ist als bei ausgeschalter Strahlungsquelle 2.

Gemäß Aspekt 5 wird ein Notbeleuchtungselement nach einem der Aspekte 1 bis 3 offenbart, dadurch gekennzeichnet, dass die Strahlungsquelle 2 zur Abgabe von elektromagnetischer Strahlung im UV-Bereich ausgebildet ist, wobei auf der von der Strahlungsquelle 2 abgewandten Seite der langnachleuchtenden Schicht 10 vorzugsweise ein auf die Strahlung der Strahlungsquelle 2 abgestimmter UV-Filter angeordnet ist.

Gemäß Aspekt 6 wird ein Notbeleuchtungselement nach einem der vorhergehenden Aspekte offenbart, dadurch gekennzeichnet, dass die Strahlungsquelle 2 als Reflexionsschicht für darauf auftreffende Strahlung zumindest im sichtbaren Bereich ausgebildet ist.

Gemäß Aspekt 7 wird ein Notbeleuchtungselement nach einem der vorhergehenden Aspekte offenbart, dadurch gekennzeichnet, dass die flächige Strahlungsquelle 2 als flächige Anordnung einer Vielzahl von lichtemittierenden Dioden 5, die vorzugsweise auf einem Trägermaterial 4 aufgedruckt sind, ausgebildet ist.

Gemäß Aspekt 8 wird ein Notbeleuchtungselement nach einem der Aspekte 1 bis 6 offenbart, dass die flächige Strahlungsquelle 2 eine Elektrolumineszenzfolie 9 ist.

Gemäß Aspekt 9 wird ein Notbeleuchtungselement nach einem der vorhergehenden Aspekte offenbart, dadurch gekennzeichnet, dass die Dicke der flächigen Strahlungsquelle 2 kleiner als 2,5 mm, vorzugsweise kleiner 1,5 mm, weiter vorzugsweise kleiner 0,75 mm, besonders vorzugsweise kleiner 0,5 mm ist.

Gemäß Aspekt 10 wird ein Notbeleuchtungselement nach einem der vorhergehenden Aspekte offenbart, dadurch gekennzeichnet, dass die Dicke der langnachleuchtenden Schicht 10 wenigstens 0,4 mm, vorzugsweise wenigstens 0,7 mm, weiter vorzugsweise wenigstens 1,2 mm beträgt.

Gemäß Aspekt 11 wird ein Notbeleuchtungselement nach einem der vorhergehenden Aspekte offenbart, dadurch gekennzeichnet, dass zur Versorgung der Strahlungsquelle 2 mit elektrischer Energie eine Kabelanbindung 7 und/oder eine Kopplungsspule 8 zur drahtlosen Energieübertragung vorgesehen ist.

Gemäß Aspekt 12 wird ein Notbeleuchtungselement nach einem der vorhergehenden Aspekte offenbart, dadurch gekennzeichnet, dass eine Steuerungsschaltung 8' zur Veränderung des Einschaltzustandes der Strahlungsquelle 2, wobei die Steuerungsschaltung 8' vorzugsweise kann auf ein Trägermaterial 4 der flächigen Strahlungsquelle 2 aufgedruckt ist.

Gemäß Aspekt 13 wird ein Notbeleuchtungselement nach einem der vorhergehenden Aspekte offenbart, dadurch gekennzeichnet, dass zum Schutz vor äußeren Einflüssen auf der der Strahlungsquelle 2 abgewandten Seite der langnachleuchtenden Schicht 10 eine transparente oder transluzente Schutzschicht 20 vorgesehen ist und/oder Strahlungsquelle 2 und langnachleuchtende Schicht 10 in einem Gehäuse 22 angeordnet sind, welches wenigstens im Bereich der langnachleuchtenden Schicht 10 transparent oder transluzent ist.

Gemäß Aspekt 14 wird ein Notbeleuchtungselement nach einem der vorhergehenden Aspekte offenbart, dadurch gekennzeichnet, dass das Notbeleuchtungselement 1 als Fluchtwegmarkierung, vorzugsweise als streifenförmige Fluchtwegmarkierung zur Verlegung am Boden einer Flugzeugkabine, ausgebildet ist.

## Patentansprüche

1. Notbeleuchtungselement (1), insbesondere für ein Verkehrsflugzeug, umfassend eine flächig ausgestaltete, elektrisch betreibbare Strahlungsquelle (2) zur flächigen Abgabe von elektromagnetischer Strahlung an ihrer Vorderseite (3), bei dem vollflächig auf der Vorderseite (3) der Strahlungsquelle (2) eine langnachleuchtende Schicht (10) vorgesehen ist, wobei die Eindringtiefe für die von der Strahlungsquelle (2) abgegebenen Strahlung in die langnachleuchtende Schicht (10) wenigstens der Dicke der langnachleuchtenden Schicht (10) entspricht und die langnachleuchtende Schicht (10) phosphoreszierendes Material umfasst, dessen Absorptionsspektrum sich mit dem Emissionsspektrum der Strahlungsquelle (2) wenigstens teilweise überschneidet und dessen Emissionsspektrum im Wesentlichen im sichtbaren Bereich liegt, wobei die Strahlungsquelle (2) zur Abgabe von elektromagnetischer Strahlung im sichtbaren Bereich und die langnachleuchtende Schicht (10) zur teilweisen Transmission der Strahlung ausgebildet sind, wobei die Emission der Strahlungsquelle (2) und die Transmission der langnachleuchtenden Schicht (10) so aufeinander abgestimmt sind, dass die Abgabe des Notbeleuchtungselementes (1) von elektromagnetischer Strahlung im sichtbaren Bereich bei eingeschalteter Strahlungsquelle (2) um wenigstens 50 % höher ist als bei ausgeschalter Strahlungsquelle (2).

2. Notbeleuchtungselement nach Anspruch 1,
**dadurch gekennzeichnet, dass**
die langnachleuchtende Schicht (10) eine transparente oder transluzente Matrix, vorzugsweise aus einem Polymer, Acrylat, Epoxid, Silikon oder Glas, mit darin eingebetteten phosphoreszierenden Pigmenten, vorzugsweise auf Basis von Zink-Sulfid oder Strontium-Aluminat, umfasst.

3. Notbeleuchtungselement nach einem der vorhergehenden Ansprüche,
**dadurch gekennzeichnet, dass**
die langnachleuchtende Schicht (10) derart ausgebildet ist, dass sie nach vollständigem Aufladen und anschließender 10 Minuten Dunkelheit eine Leuchtdichte von wenigstens 0,03 mcd/m², vorzugsweise von wenigstens 0,1 mcd/m², weiter vorzugsweise von wenigstens 0,3 mcd/m² abgibt.

4. Notbeleuchtungselement nach einem der vorhergehenden Ansprüche,
**dadurch gekennzeichnet, dass**
die Strahlungsquelle (2) als Reflexionsschicht für darauf auftreffende Strahlung zumindest im sichtbaren Bereich ausgebildet ist.

5. Notbeleuchtungselement nach einem der vorhergehenden Ansprüche,
**dadurch gekennzeichnet, dass**
die flächige Strahlungsquelle (2) als flächige Anordnung einer Vielzahl von lichtemittierenden Dioden (5), die vorzugsweise auf einem Trägermaterial (4) aufgedruckt sind, ausgebildet ist.

6. Notbeleuchtungselement nach einem der Ansprüche 1 bis 4, **dadurch gekennzeichnet, dass**
die flächige Strahlungsquelle (2) eine Elektrolumineszenzfolie (9) ist.

7. Notbeleuchtungselement nach einem der vorhergehenden Ansprüche,
**dadurch gekennzeichnet, dass**
die Dicke der flächigen Strahlungsquelle (2) kleiner als 2,5 mm, vorzugsweise kleiner 1,5 mm, weiter vorzugsweise kleiner 0,75 mm, besonders vorzugsweise kleiner 0,5 mm ist.

8. Notbeleuchtungselement nach einem der vorhergehenden Ansprüche,
**dadurch gekennzeichnet, dass**
die Dicke der langnachleuchtenden Schicht (10) wenigstens 0,4 mm, vorzugsweise wenigstens 0,7 mm, weiter vorzugsweise wenigstens 1,2 mm beträgt.

9. Notbeleuchtungselement nach einem der vorhergehenden Ansprüche,
**dadurch gekennzeichnet, dass**
zur Versorgung der Strahlungsquelle (2) mit elektrischer Energie eine Kabelanbindung (7) und/oder eine Kopplungsspule (8) zur drahtlosen Energieübertragung vorgesehen ist.

10. Notbeleuchtungselement nach einem der vorhergehenden Ansprüche,
**dadurch gekennzeichnet, dass**
eine Steuerungsschaltung (8') zur Veränderung des Einschaltzustandes der Strahlungsquelle (2) vorgesehen ist, wobei die Steuerungsschaltung (8') vorzugsweise auf ein Trägermaterial (4) der flächigen Strahlungsquelle (2) aufgedruckt ist.

11. Notbeleuchtungselement nach einem der vorhergehenden Ansprüche,
**dadurch gekennzeichnet, dass**
zum Schutz vor äußeren Einflüssen auf der der Strahlungsquelle (2) abgewandten Seite der langnachleuchtenden Schicht (10) eine transparente oder transluzente Schutzschicht (20) vorgesehen ist und/oder Strahlungsquelle (2) und langnachleuchtende Schicht (10) in einem Gehäuse (22) angeordnet sind, welches wenigstens im Bereich der langnachleuchtenden Schicht (10) transparent oder transluzent ist.

12. Notbeleuchtungselement nach einem der vorhergehenden Ansprüche,
**dadurch gekennzeichnet, dass**
das Notbeleuchtungselement (1) als Fluchtwegmarkierung, vorzugsweise als streifenförmige Fluchtwegmarkierung zur Verlegung am Boden einer Flugzeugkabine, ausgebildet ist.
